# EUROPÄISCHE PATENTANMELDUNG

(11) **EP 3 135 115 A1**
(43) Veröffentlichungstag der Anmeldung: **01.03.2017**
(21) Anmeldenummer: 15182946.2
(22) Anmeldetag: 28.08.2015
(51) Int. Cl.: A21B 3/16, B24C 1/00

(54) **ANORDNUNG UND VERFAHREN ZUM REINIGEN VON HALBSCHALENFÖRMIGEN BACKFORMKAVITÄTEN**

(71) Anmelder: Haas Food Equipment GmbH, 1210 Wien (AT)
(72) Erfinder: HAAS, Johannes, 1040 Wien (AT); HAAS, Josef, 2100 Leobendorf (AT); JIRASCHEK, Stefan, 2202 Königsbrunn (AT); ZWANZINGER, Gerhard, 2202 Königsbrunn (AT)
(74) Vertreter: Puchberger & Partner Patentanwälte

(57) **Zusammenfassung**

Verfahren und Anordnung zum Reinigen von halbschalenförmigen Backformkavitäten (1) einer zur Herstellung von Hohlwaffeln oder Kuchen eingerichteten Backform (2), wobei die Anordnung eine Trockeneisstrahlvorrichtung (3) zur Bereitstellung eines heterogenen Gemisches (4) aus Trockeneis, wie insbesondere gefrorenem, festem CO2-Granulat und aus einem Trägerfluid, wie insbesondere Druckluft umfasst, wobei die Trockeneisstrahlanordnung (3) mit einer Düse (5) zur Ausgabe des Gemisches (4) verbunden ist, wobei ein Düsenausgang (6) der Düse (5) auf einen Reinigungsbereich (7) gerichtet ist, wobei eine Haltevorrichtung (8) zur Halterung einer Backform (2) vorgesehen ist, und wobei eine Bewegungsvorrichtung (9) zur Relativbewegung der Düse (5) gegenüber der Haltevorrichtung (8) oder der von der Haltevorrichtung (8) gehaltenen Backform (2) vorgesehen ist.

## Beschreibung

Die Erfindung betrifft eine Anordnung und ein Verfahren gemäß Oberbegriff der unabhängigen Patentansprüche.

Zur industriellen Herstellung von Backprodukten wird üblicherweise ein Teig oder eine Backmasse in eine Backform gefüllt. Diese Backform wird dann in einem Backraum einer Backmaschine einer gewissen Backtemperatur ausgesetzt, womit der darin enthaltene Teig oder die darin enthaltende Backmasse gebacken wird.

Nach der Entnahme des gebackenen Backproduktes aus der Backform kann es vorkommen, dass Rückstände, wie insbesondere Teigreste oder Fett- bzw. Ölablagerungen an der Backform haften. Da die Backformen in der Regel wiederverwendet werden, kommt es dadurch zu einer Verschlechterung der Qualität der Backprodukte, womit die Effizienz des Herstellungsverfahrens beeinträchtigt wird.

Aus diesem Grund müssen die Backformen in regelmäßigen Abständen gereinigt werden. Herkömmliche flache Backplatten zur Herstellung von Flachwaffeln werden beispielsweise durch eine Bürstenanordnung gereinigt. Die meist zylindrischen Bürsten werden dabei über die strukturierte Backoberfläche der Backplatten geführt, womit etwaige Schmutzpartikel abgebürstet werden. Zur Herstellung von beispielsweise Kuchen oder Hohlwaffeln werden jedoch Backformen verwendet, die halbschalenförmige, tiefe Backformkavitäten aufweisen. Diese Kavitäten können durch herkömmliche Bürstenvorrichtungen nicht ausreichend gründlich gereinigt werden.

Jedoch tritt insbesondere bei relativ tiefen, halbschalenförmigen Backformkavitäten für Kuchen und ähnliche Produkte eine besonders starke Verschmutzung auf, da diese Produkte einen relativ hohen Fettanteil in der Teigmasse enthalten. Ein weiteres Problem bei der Reinigung derartiger Backformkavitäten ist, dass die Form der Kavitäten oft komplex ist und insbesondere tief liegende Kanten oder nahezu senkrecht verlaufende Wände umfasst. Eine derartige Backmaschine ist beispielsweise in dem Dokument WO 2014 111 511 A1 offenbart.

Zur Durchführung eines effizienten Reinigungsverfahrens bei der industriellen Herstellung von Waffelprodukten ist es wichtig, dass die Reinigung automatisch oder zumindest automatisiert erfolgen kann. Zur weiteren Verbesserung der Effizienz des Herstellungsprozesses und des Reinigungsprozesses kann es vorteilhaft sein, wenn bei der Reinigung der Backformen der Backprozess nicht unterbrochen werden muss.

Aufgabe der Erfindung ist es nun, die Nachteile des Standes der Technik zu überwinden und insbesondere eine Anordnung und ein Verfahren zu schaffen, die eine effiziente Reinigung von Backformkavitäten erlauben.

Die erfindungsgemäße Aufgabe wird insbesondere durch die Merkmalskombinationen der unabhängigen Patentansprüche gelöst.

Die Erfindung ist eine Anordnung zum Reinigen von halbschalenförmigen Backformkavitäten, einer zur Herstellung von Hohlwaffeln oder Kuchen eingerichteten Backform, wobei die Anordnung eine Trockeneisstrahlvorrichtung zur Bereitstellung eines heterogenen Gemisches aus Trockeneis, wie insbesondere gefrorenem, festem CO₂-Granulat und aus einem Trägerfluid, wie insbesondere Druckluft umfasst, wobei die Trockeneisstrahlanordnung mit einer Düse zur Ausgabe des Gemisches verbunden ist, wobei ein Düsenausgang der Düse auf einen Reinigungsbereich gerichtet, und wobei eine Haltevorrichtung zur Halterung einer Backform vorgesehen ist. Die Erfindung ist dadurch gekennzeichnet, dass eine Bewegungsvorrichtung zur Relativbewegung der Düse gegenüber der Haltevorrichtung oder der von der Haltevorrichtung gehaltenen Backform vorgesehen ist.

Weiters kann ein Gehäuse vorgesehen sein, das den Reinigungsbereich und den Düsenausgang umgibt und das den Reinigungsbereich zu einem überwiegenden Teil oder vollständig abschirmt. Bevorzugt ist eine Absaugung zur Absaugung des von der Backform umgelenkten Gemisches und der gegebenenfalls darin enthaltenen Schmutzpartikel vorgesehen. Die Bewegungsvorrichtung umfasst eine Backformbewegungsvorrichtung zur Bewegung einer oder mehrerer Backformen, wobei die Backformbewegungsvorrichtung insbesondere als Endlosförderer, Kettenförderer, Bandförderer, Riemenförderer, Greifbalken, Greifarm oder Linearantrieb ausgebildet ist.

Weitere Merkmale sind gegebenenfalls, dass die Bewegungsvorrichtung eine Düsenbewegungsvorrichtung zur Bewegung der Düse gegenüber der Backform umfasst, wobei die Düsenbewegungsvorrichtung, insbesondere als Linearantrieb ausgebildet ist. Die Bewegungsvorrichtung umfasst eine Backformbewegungsvorrichtung zur Bewegung einer oder mehrerer Backformen, wobei die Bewegungsvorrichtung eine Düsenbewegungsvorrichtung zur Bewegung der Düse gegenüber der Backform umfasst, und die Backformbewegungsvorrichtung und die Düsenbewegungsvorrichtung zwei unabhängig voneinander betätigbare Bewegungsvorrichtungen sind, deren Bewegungsrichtungen voneinander abweichen und insbesondere quer zueinander verlaufen.

Es können vorteilhaft zwei oder mehrere Düsen vorgesehen sein, die zur Abgabe des Gemisches auf einen Reinigungsbereich gerichtet sind, wobei die Düsen insbesondere starr miteinander verbunden sind, und wobei die Düsen insbesondere zusammen durch Betätigung der Düsenbewegungsvorrichtung verfahrbar sind.

Bevorzugt sind zwei oder mehr Düsen vorgesehen sind, die zur Abgabe des Gemisches auf einen Reinigungsbereich gerichtet sind, wobei zwei Düsen in unterschiedlichen Winkeln auf einen Reinigungsbereich und insbesondere auf eine im Reinigungsbereich positionierte Backformkavität gerichtet sind. Nach einem weiteren Merkmal ist eine Heizvorrichtung zur Vorwärmung der Backform nach der Reinigung vorgesehen.

Eine Klappvorrichtung zum Öffnen und/oder Schließen einer als Backzange ausgebildeten Backform oder zum Wenden einer Backform kann vorgesehen sein.

Weiters kann in vorteilhafter Weise eine Bilderfassungseinrichtung zur optischen Erfassung des Verschmutzungsgrades einer Backform vorgesehen sein.

Weitere vorteilhafte Merkmale liegen gegebenenfalls darin, dass die Anordnung ein Maschinengestell mit einer Backformbewegungsvorrichtung zur Bewegung einer oder mehrerer Backformen umfasst, und dass entlang des Verlaufs der Backformbewegungsvorrichtung eine oder die Heizvorrichtung, eine oder die Klappvorrichtung, eine oder die Bilderfassungseinrichtung und eine oder die Düsen angeordnet und insbesondere nacheinander angeordnet sind.

Eine Backvorrichtung kann vorgesehen sein, die einen Endlosförderer umfasst, an dem die Backformen und insbesondere die als Backzangen ausgebildeten Backformen lösbar festlegbar oder festgelegt sind, wobei eine Backformentnahmevorrichtung zur Entnahme einer verschmutzten Backform aus der Backvorrichtung, zur Übergabe an die Haltevorrichtung oder an die Backformbewegungsvorrichtung und zur Übergabe einer oder der gereinigten Backform an die Backvorrichtung vorgesehen ist.

Die Erfindung betrifft auch ein Verfahren zum Reinigen einer Backform, umfassend folgende Schritte:
- Backen eines oder mehrerer Backprodukte in einer Backform,
- Reinigen der Backform durch Ausgeben eines Gemisches umfassend Trockeneis, wie insbesondere gefrorenes, festes CO₂-Granulat und ein Trägerfluid wie insbesondere Druckluft durch mindestens eine Düse, und durch Betätigen einer Bewegungsvorrichtung zur Relativbewegung der mindestens einen Düse gegenüber der Halterung oder gegenüber der von der Halterung gehaltenen Backform, wobei eine zu reinigende Backform nach dem Backen eines oder mehrerer Backprodukte in einer Backform und vor dem Reinigen der Backform von einer Backformentnahmevorrichtung aus der Backmaschine oder aus dem Backprozess entnommen wird und an die Halterung oder die Backformbewegungsvorrichtung übergeben wird, und dass die Backform nach dem Reinigen von einer Backformentnahmevorrichtung wieder an die Backmaschine übergeben wird.

Vorteilhafte Merkmale der Erfindung sind auch dadurch gegeben, dass ein Gehäuse vorgesehen ist, das den Reinigungsbereich und den Düsenausgang umgibt und das den Reinigungsbereich zumindest teilweise, zu einem überwiegenden Teil oder vollständig abschirmt, dass eine Absaugung zur Absaugung des von der Backform umgelenkten Gemisches und der gegebenenfalls darin enthaltenen Schmutzpartikeln vorgesehen ist, und dass die Absaugung, zur Absaugung des Gemisches und der gegebenenfalls enthaltenen Schmutzpartikel aus dem Gehäuse, in das Gehäuse ragt oder mündet. Die Backvorrichtung kann einen Endlosförderer umfassen, an dem die Backformen und insbesondere die als Backzangen ausgebildeten Backformen festlegbar oder festgelegt sind, wobei die Backformen entlang des Endlosförderers jeweils nacheinander
- von einer Beschickungsvorrichtung zum Einfüllen eines Teiges oder einer Backmasse in die Backform,
- durch einen beheizten Backraum,
- und weiter zu einer Produktentnahmevorrichtung zur Entnahme der gebackenen Produkte aus der Backform befördert werden,
wobei gegebenenfalls unmittelbar vor der Produktentnahmevorrichtung eine Vorrichtung zum Öffnen der Backzange und gegebenenfalls unmittelbar nach der Beschickungsvorrichtung eine Vorrichtung zum Schließen der Backzange vorgesehen ist.

Das Verfahren kann dadurch gekennzeichnet sein, dass die Backform nach dem Reinigen und vor oder während der Übergabe an die Backmaschine von einer Heizvorrichtung vorgewärmt wird.

Die Backform ist auf eine Temperatur vorgewärmt, die die Backform im Backprozess an jener Stelle in der Backmaschine hätte, an der sie wieder in den Backprozess eingegliedert wird. Der Verschmutzungsgrad der zu reinigenden Fläche der Backform und insbesondere des Reinigungsbereichs kann durch eine Bilderfassungseinrichtung erfasst werden, wobei die dabei gewonnen Daten zur Steuerung des Reinigungsprozesses verarbeitet werden.

Erfindungsgemäß wird vorgeschlagen, dass zur Reinigung der Backformkavitäten eine Trockeneisstrahlanordnung vorgesehen ist. Diese Trockeneisstrahlanordnung dient zur Bereitstellung eines Gemisches aus Trockeneis und einem Trägerfluid. Bevorzugt liegt das Trockeneis beispielsweise als CO₂ Granulat vor. Das Trägerfluid kann insbesondere Druckluft sein. Derartige Trockeneisstrahlanordnungen sind von ihrem grundsätzlichen Aufbau bekannt. Insbesondere weiß der Fachmann, wie eine derartige Trockeneisstrahlanordnung zur Oberflächenreinigung aufgebaut ist.

Die erfindungsgemäße Anordnung umfasst nun zusätzlich mindestens eine spezielle Düse mit einem Düsenausgang. Die Trockeneisstrahlanordnung ist mit der Düse verbunden, sodass das Gemisch durch den Düsenausgang auf einen Reinigungsbereich gerichtet ist. In überraschender Weise hat sich herausgestellt, dass das Gemisch einer Trockeneisstrahlanordnung sehr gut zur Reinigung von Backformkavitäten geeignet ist. Durch die turbulente Strömung erreicht das Gemisch auch enge Kanten oder Spalten einer Kavität, die von Bürsten beispielsweise nicht gereinigt werden können.

Zur Durchführung eines effizienten Reinigungsverfahrens ist eine Bewegungsvorrichtung vorgesehen, über die die Düse gegenüber der Backform bzw. gegenüber einer der backformhaltenden Haltevorrichtung bewegt werden kann.

Insbesondere kann eine Backform mehrere Backformkavitäten enthalten. Durch die Bewegungsvorrichtung kann eine automatische oder automatisierte Reinigung einer Backform, insbesondere einer Backform, die mehrere Backformkavitäten umfasst, erreicht werden.

Um zu verhindern, dass das teilweise mit hoher Geschwindigkeit austretende Gemisch die Umgebung verschmutzt, ist bevorzugt ein Gehäuse vorgesehen sein. Dieses Gehäuse schirmt insbesondere den Reinigungsbereich ab. Dies bedeutet, dass ein größtenteils geschlossener Raum gebildet wird, in dem die Reinigung geschieht. Dieser Raum kann beispielsweise zumindest teilweise durch die Backform selbst begrenzt sein. Bevorzugt ist dieser Raum teilweise durch die Backform und teilweise durch das Gehäuse begrenzt. Es kann jedoch auch ein im Wesentlichen geschlossenes Gehäuse vorgesehen sein, in das die Backform eingebracht werden kann.

Bevorzugt ist zur Absaugung des austretenden Gemisches, insbesondere jenes Teils des Gemisches, der von der Backform umgelenkt wird, eine Absaugung vorgesehen. Die Absaugung dient folglich insbesondere der Absaugung der gelösten Schmutzpartikel und des ausgegebenen Gemisches.

Die Bewegungsvorrichtung zur Relativbewegung der Düse gegenüber der Backform kann mehrere Bewegungsvorrichtungen umfassen. Beispielsweise kann eine Backformbewegungsvorrichtung vorgesehen sein, die zur Bewegung einer oder mehrerer Backformen, insbesondere der Haltevorrichtung der Backformen eingerichtet ist. Diese Backformbewegungsvorrichtung kann beispielsweise als Endlosförderer, Kettenförderer, Bandförderer, Riemenförderer, aber gegebenenfalls auch als Greifbalken oder Greifarm ausgebildet sein.

Die Bewegungsvorrichtung kann auch eine eigenständige Düsenbewegungsvorrichtung umfassen, die dazu eingerichtet ist, die Düse zu bewegen. Gemäß einer bevorzugten Ausführungsform weist die Düsenbewegungsvorrichtung eine mögliche Bewegungsrichtung auf, die von der Bewegungsrichtung der Backformbewegungsvorrichtung abweicht. Bevorzugt verlaufen die beiden Bewegungsrichtungen quer bzw. normal zueinander, sodass eine X-Y-Bewegungsvorrichtung gebildet ist.

Gemäß einer bevorzugten Ausführungsform sind zwei oder mehr Düsen bzw. zwei oder mehr Düsenausgänge vorgesehen. Diese Düsen sind zur Ausgabe eines Gemisches eingerichtet und insbesondere in unterschiedlichen Winkeln auf den Reinigungsbereich gerichtet. Besonders bei tiefen Backformen kann es vorteilhaft sein, wenn die Gemischstrahlen in unterschiedlichen Winkeln in die Backformen bzw. in die Backformenkavitäten eintreten.

Gemäß einer bevorzugten Ausführungsform weisen die Ausgänge der Düsen bzw. die ausgegebenen Gemischstrahlen zueinander gerichtet in die Backformkavitäten bzw. auf den Reinigungsbereich.

Zur weiteren Verbesserung der Effizienz kann vorgesehen sein, dass eine Heizvorrichtung zur Vorwärmung der Backform vorgesehen ist. Insbesondere durch die Reinigung mit einem Trockeneisstrahl kommt es zu einer Abkühlung bei der Reinigung der Backform. Wird diese Backform erneut zum Backen verwendet, so kann es vorkommen, dass die Backform beim Einfüllen des Teiges noch nicht die optimale Betriebstemperatur aufweist, wodurch die Effizienz verschlechtert werden könnte. Aus diesem Grund kann eine Heizvorrichtung für die Backform vorgesehen sein, die die Backform wieder auf Betriebstemperatur bringt. Gegebenenfalls ist die Heizvorrichtung eine Heizvorrichtung einer Backmaschine. Gegebenenfalls ist eine gesonderte Heizvorrichtung vorgesehen, die unabhängig von der Heizvorrichtung der Backmaschine betätigbar und/oder angeordnet ist.

Gemäß einer bevorzugten Ausführungsform umfasst die Anordnung eine eigenständige Reinigungsstation. Diese Reinigungsstation kann beispielsweise an eine bestehende Backvorrichtung angebaut oder angebracht werden. Gegebenenfalls ist die Reinigungsstation jedoch auch entfernt vom Backofen vorgesehen. Gemäß einer oder dieser Ausführungsform können die Backformen bzw. die als Backzangen ausgebildeten Backformen lösbar am Endlosförderer eine Backvorrichtung festlegbar oder festgelegt sein. Durch diese lösbare Festlegung können die Backformen aus der Backvorrichtung bzw. aus dem laufenden Backprozess entnommen werden. Die Entnahme geschieht insbesondere durch eine Backformentnahmevorrichtung. Über diese Backformentnahmevorrichtung kann eine Backform aus der Backmaschine bzw. aus dem Backprozess entnommen werden und zur Reinigung an eine Haltevorrichtung oder an die Bewegungsvorrichtung übergeben werden. Nach dem Reinigungsprozess kann die gereinigte Backform durch Betätigung der Backformentnahmevorrichtung wieder der Backvorrichtung bzw. dem Backprozess zugeführt werden. Diese Backformentnahmevorrichtung kann insbesondere als herkömmlicher Roboterarm, Greifarm oder Greifbalken ausgebildet sein. Die Backformentnahmevorrichtung kann somit gemäß Stand der Technik ausgebildet sein. Insbesondere weiß der Fachmann, wie er eine derartige Backformentnahmevorrichtung ausbilden kann.

Gegebenenfalls betrifft die Erfindung ein Verfahren zum Reinigen einer Backform. Gemäß einer bevorzugten Ausführungsform wird eine Backform aus dem Backprozess bzw. aus der Backvorrichtung entnommen, gegebenenfalls aufgeklappt und gegebenenfalls von einer Bilderfassungsvorrichtung erfasst, sodass der Verschmutzungsgrad festgestellt werden kann. Anschließend wird die Backform durch Relativbewegung der Düse gegenüber der Backform durch das Gemisch gereinigt. Im Anschluss kann die Backform zugeklappt und/oder vorgewärmt werden, sodass diese wieder in den Backprozess eingegliedert werden kann. Durch die Entnahme der Backform aus der Backmaschine und durch die Reinigung in einer eigenständigen Reinigungsstation kann während der Reinigung der Backprozess nahezu ungestört fortgesetzt werden. Gegebenenfalls wird gleich nach der Entnahme einer zu reinigenden Backform an die Stelle dieser entnommenen Backform eine bereits gereinigte und gegebenenfalls vorgewärmte Backform eingefügt.

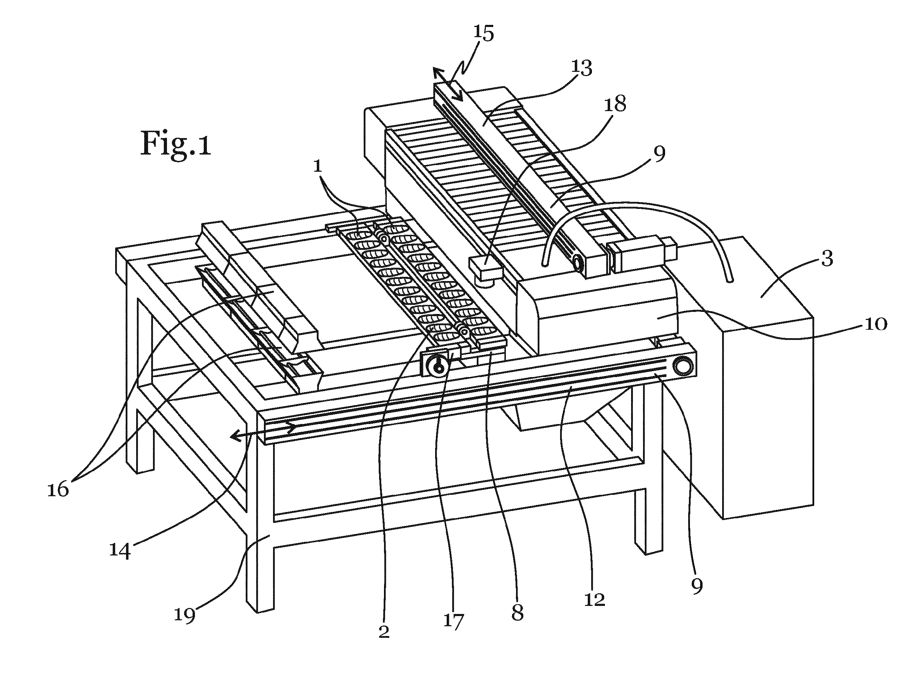

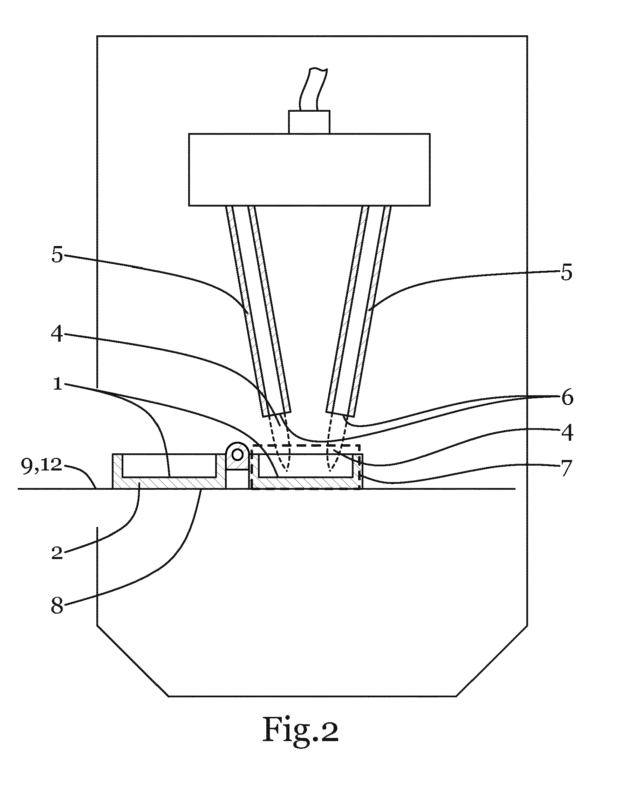

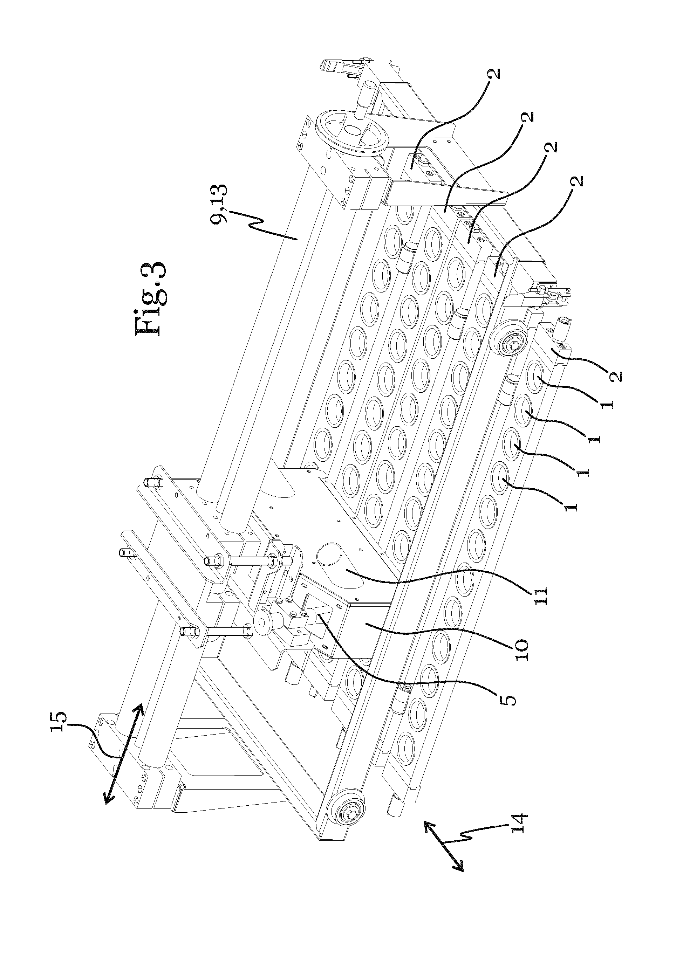

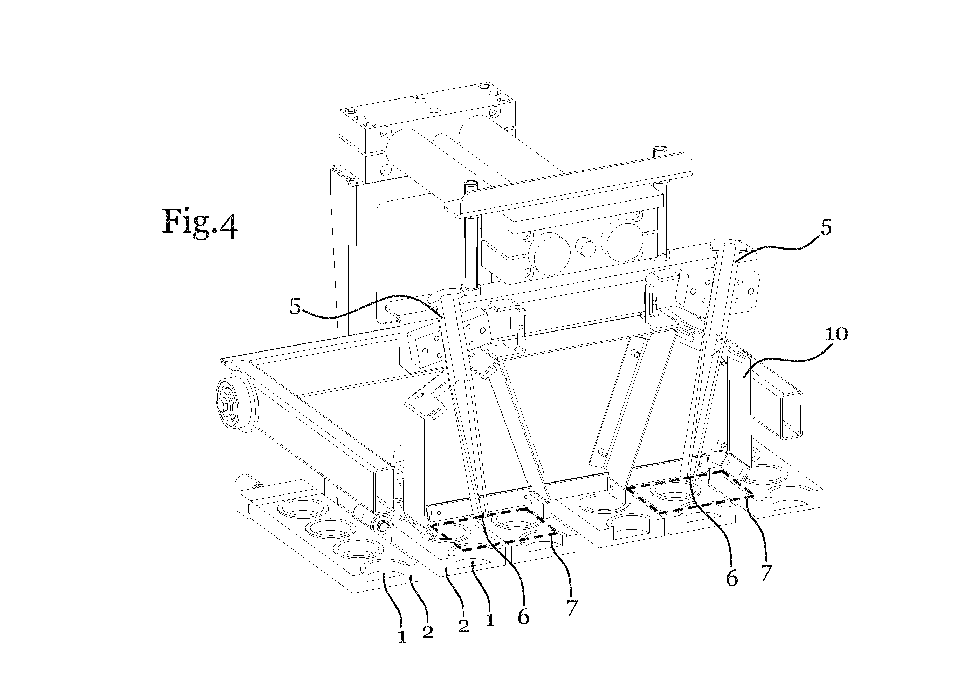

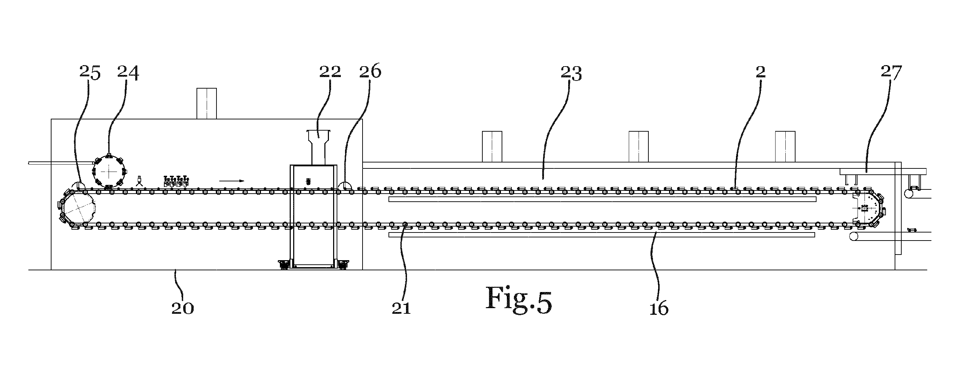

Die Erfindung wird in weiterer Folge anhand der Figuren weiter beschrieben, wobei Figur 1 eine Ausführungsform einer Anordnung, Figur 2 ein Detail der Anordnung aus Figur 1, Figur 3 eine weitere Ausführungsform einer Anordnung, Figur 4 ein Detail der Anordnung der Figur 3 und Figur 5 eine Backvorrichtung zeigen.

Wenn nicht anders angegeben, so entsprechen die Bezugszeichen folgenden Komponenten: Backformkavität 1, Backform 2, Trockeneisstrahlvorrichtung 3, Gemisch 4, Düse 5, Düsenausgang 6, Reinigungsbereich 7, Haltevorrichtung 8, Bewegungsvorrichtung 9, Gehäuse 10, Absaugung 11, Backformbewegungsvorrichtung 12, Düsenbewegungsvorrichtung 13, Bewegungsrichtung (der Backformbewegungsvorrichtung) 14, Bewegungsrichtung (der Düsenbewegungsvorrichtung) 15, Heizvorrichtung 16, Klappvorrichtung 17, Bilderfassungseinrichtung 18, Maschinengestell 19, Backvorrichtung 20, Endlosförderer 21, Beschickungsvorrichtung 22, Backraum 23, Produktentnahmevorrichtung 24, Vorrichtung (zum Öffnen der Backzange) 25, Vorrichtung (zum Schließen der Backzange) 26, Backformentnahmevorrichtung 27

Figur 1 zeigt eine schematische Schrägansicht einer erfindungsgemäßen Anordnung oder einen Teil einer erfindungsgemäßen Anordnung. Figur 1 zeigt insbesondere eine als eigenständige Reinigungsstation ausgebildete Vorrichtung. Diese umfasst eine Trockeneisstrahlvorrichtung 3 und eine Haltevorrichtung 8 zur Halterung mindestens einer Backform 2. Die Backform 2 umfasst beispielsweise mehrere Backformkavitäten 1. Insbesondere kann die Backform 2 in allen Ausführungsformen als Backzange ausgebildet sein, die zwei gelenkig miteinander verbundene Backplatten umfasst. Bevorzugt weist die Backform 2 auf beiden Backplatten Backformkavitäten 1 auf, die halbschalenförmig ausgebildet sind und gegebenenfalls in zusammengeklappter Stellung paarweise einen Hohlraum bilden, in dem das Backprodukt gebacken werden kann. Ferner umfasst die Anordnung eine Bewegungsvorrichtung 9. Diese Bewegungsvorrichtung 9 kann insbesondere eine Backformbewegungsvorrichtung 12 zur Bewegung der Backform(en) 2 und eine Düsenbewegungsvorrichtung 13 zur Bewegung der in der Figur nicht sichtbaren Düsen umfassen. Bevorzugt weicht die Bewegungsrichtung 15 der Düsenbewegungsvorrichtung 13 von der Bewegungsrichtung 14 der Backformbewegungsvorrichtung 12 ab. Insbesondere verlaufen die beiden Bewegungsrichtungen 14, 15 quer oder orthogonal zueinander.

Ferner umfasst die Anordnung gemäß der vorliegenden Ausführungsform ein Gehäuse 10, in dem die Reinigung der Backform 2 stattfindet.

Bevorzugt umfasst die Anordnung eine Heizvorrichtung 16. In der vorliegenden Ausführungsform ist die Heizvorrichtung 16 als eigenständige, von der Heizvorrichtung einer Backmaschine unabhängig betätigbare Heizvorrichtung. Bevorzugt umfasst die Heizvorrichtung in allen Ausführungsformen Komponenten, die dazu eingerichtet sind, eine Backform, insbesondere eine gereinigte Backform, auf eine bestimmte Temperatur zu erwärmen. Dazu sind in der vorliegenden Ausführungsform zwei Heizelemente vorgesehen, zwischen die die Backform 2 befördert werden kann. Insbesondere kann die Backform 2 über die Bewegungsvorrichtung 9 bzw. über die Backformbewegungsvorrichtung 12 zwischen die beiden Heizelemente der Heizvorrichtung 16 transportiert werden. Dort kann die Backplatte während einer gewissen Verweilzeit aufgeheizt werden. Die Heizvorrichtung 16 kann beispielsweise als Strahlungsheizvorrichtung, die insbesondere als elektrische oder gasbetriebene Strahlungsheizvorrichtung ausgebildet sein. In allen Ausführungsformen kann die Heizvorrichtung 16 als Vorwärmvorrichtung ausgebildet sein.

Ferner kann die Anordnung eine Klappvorrichtung 17 umfassen. Eine derartige Klappvorrichtung 17 ist insbesondere dann vorteilhaft, wenn die Backform 2 als Backzange ausgebildet ist. So kann eine in geschlossener Stellung übergebene Backzange bzw. Backform 2 durch die Klappvorrichtung 17 auf- oder zugeklappt werden. Insbesondere ist es zum Reinigen der Backformkavitäten 1 gegebenenfalls notwendig, die Backform 2 derartig zu positionieren, sodass die Düsen der Anordnung die Backformkavitäten 1 reinigen können. Die Klappvorrichtung 17 kann beispielsweise einen Greiffortsatz aufweisen, der in Wirkkontakt mit einer der Platten treten kann, um durch eine Schwenkbewegung die Backform 2 aufklappen zu können.

Ferner kann die Anordnung eine Bilderfassungseinrichtung 18 umfassen. Diese Bilderfassungseinrichtung 18 kann insbesondere zur optischen Erkennung des Verschmutzungsgrades der Backformkavitäten 1 oder der Backform 2 geeignet und/oder eingerichtet sein. Gegebenenfalls ist die Bilderfassungseinrichtung 18 in allen Ausführungsformen bewegbar und insbesondere über die Bewegungsvorrichtung 9 bewegbar angeordnet, sodass der Aufnahmebereich der Bilderfassungseinrichtung 18 durch Verfahren der Bilderfassungseinrichtung 18 vergrößert werden kann. Gegebenenfalls wird die Bilderfassungseinrichtung 18 durch Betätigung der Düsenbewegungsvorrichtung 13 bewegt.

In der vorliegenden Ausführungsform weist die Anordnung bzw. die als eigenständige Reinigungsstation ausgebildete Anordnung ein Maschinengestell 19 auf.

In der vorliegenden Ausführungsform ist die Düsenbewegungsvorrichtung 13, insbesondere als Linearantrieb ausgebildet. Da die Düsen der Anordnung bewegbar ausgebildet sind, und die Trockeneisstrahlvorrichtung 3 ortsfest angeordnet ist, ist die Zuleitung des Gemisches an die Düse flexibel oder beweglich auszugestalten. Beispielsweise kann eine ortsfest am Gehäuse 10 angeordnete oder durch das Gehäuse 10 durchgeführte Durchführung der Leitung zur Beförderung des Gemisches der Trockeneisstrahlvorrichtung 3 vorgesehen sein. Bevorzugt ist im Inneren des Gehäuses eine Leitung schleifenförmig angeordnet, sodass die Bewegungsfreiheit der Düse durch die Leitung zur Zuführung des Gemisches nicht beeinträchtigt ist.

Gegebenenfalls kann die Durchführung für die Leitung zur Zuführung des Gemisches der Trockeneisstrahlvorrichtung 3 jedoch auch bewegbar vorgesehen sein. In diesem Fall ist, wie insbesondere auch in Figur 1 dargestellt, ein Teil des Gehäuses bewegbar ausgebildet und insbesondere rollladenförmig ausgebildet. Insbesondere sind flexibel lamellenförmig miteinander verbundene Elemente vorgesehen, die an den seitlichen Enden entlang der Bewegungsrichtung 15 der Düsenbewegungsvorrichtung 13 aufgerollt werden können. Ähnlich einem Garagentor oder einem Rollladen kann die Durchführung für das Gemisch gemeinsam mit der Düse verfahren werden, ohne dabei das Gehäuse zu öffnen.

Figur 2 zeigt eine schematische Darstellung eines Schnittes von Teilen der Anordnung der Figur 1. Eine als Backzange ausgeführte Backform 2 ist aufgeklappt auf der Haltevorrichtung 8 innerhalb eines Gehäuses 10 der Anordnung angeordnet. Die Backform 2 umfasst mindestens eine, bevorzugt jedoch mehrere Backformkavitäten 1. Diese Backformkavitäten 1 sind zur Reinigung derart angeordnet, dass sie Richtung Düse 5 bzw. Düsenausgang 6 geöffnet sind. Gegebenenfalls sind in allen Ausführungsformen mehrere Düsen 5 bzw. mehrere Düsenausgänge 6 vorgesehen. Gegebenenfalls sind die Düsen 5 bzw. die Düsenausgänge 6 in allen Ausführungsformen derart angeordnet, dass mehrere Gemischstrahlen in unterschiedlichen Winkeln auf den Reinigungsbereich 7 ausgegeben werden. Insbesondere sind die Düsen 5 bzw. die Düsenausgänge 6 zueinander und Richtung Reinigungsbereich 7 bzw. Richtung Backformkavität 1 gerichtet.

Das Gehäuse 10 ist in der vorliegenden Ausführungsform im Wesentlichen geschlossen ausgebildet, sodass eine Abschirmung des Reinigungsbereichs 7 erfolgt. Gegebenenfalls ist eine Absaugung vorgesehen, die in der vorliegenden Ausführungsform nicht dargestellt ist. Gegebenenfalls werden Schmutzpartikel im unteren Bereich des Gehäuses 10 gesammelt.

Bevorzugt weist das Gehäuse 10 in der vorliegenden Ausführungsform eine Öffnung auf, durch die die Backform 2 in das Gehäuse eingebracht werden kann. Insbesondere verläuft auch die Bewegungsvorrichtung 9 bzw. die Backformbewegungsvorrichtung 12 durch diese Öffnung in das Gehäuse 10.

Durch Betätigung der Backformbewegungsvorrichtung 12 können die Backformkavitäten 1 in den Reinigungsbereich 7 befördert werden. So kann beispielsweise, wie in der vorliegenden Darstellung, zuerst die Backformkavität 1 der ersten Backplatte in den Reinigungsbereich verschoben werden. Durch Betätigung der Backformbewegungsvorrichtung 12 kann dann die Backform 2 derart verfahren werden, dass die Backformkavität 1 der zweiten Backplatte im Reinigungsbereich 7 angeordnet ist. Diese Bewegung geschieht in der vorliegenden Darstellung beispielsweise entlang der Bildebene.

Gegebenenfalls können auch die Düsen 5 durch die Düsenbewegungsvorrichtung 13 bewegt werden. Diese Bewegung geschieht in der vorliegenden Darstellung, insbesondere entlang einer projizierend verlaufenden Richtung. Durch die Düsenbewegungsvorrichtung 13 können mehrere entlang einer Geraden angeordnete Backformkavitäten einer Backplatte bzw. einer Backform 2 gereinigt werden.

Durch die unterschiedlichen Bewegungsrichtungen 14, 15 der Komponenten der Bewegungsvorrichtung 9 ist eine X-Y-Bewegungsfreiheit der Düsen gegenüber der Backform 2 gebildet, wodurch eine flächige Reinigung der Backform 2 ermöglicht ist.

Figur 3 zeigt eine weitere Ausführungsform von Details einer möglichen Anordnung in einer schematischen Schrägansicht. Die Backformen 2 umfassen jeweils eine Reihe von Backformkavitäten 1. Die Backform 2 ist als Backzange ausgebildet, und befindet sich in einer aufgeklappten Stellung. Die Anordnung umfasst zumindest eine Düse 5, an die eine nicht dargestellte Trockeneisstrahlungsvorrichtung 3 anschließbar oder angeschlossen ist. Die Düse 5 ist über eine Bewegungsvorrichtung 9, insbesondere über die Düsenbewegungsvorrichtung 13 bewegbar angeordnet. In der vorliegenden Ausführungsform ist die Düsenbewegungsvorrichtung 13 beispielhaft als Handspindel bzw. als Handantrieb ausgebildet. Die Anordnung umfasst ein Gehäuse 10. Dieses Gehäuse ist in der vorliegenden Ausführungsform Richtung Backform 2 geöffnet ausgebildet, wodurch die Abschirmung bzw. das Gehäuse 10, zumindest teilweise von der Backform 2 begrenzt ist. Das Gehäuse 10 kann mit der Düse 5 über die Düsenbewegungsvorrichtung 13 mitbewegt werden. Das Gehäuse 10 ist in dieser Ausführungsform als Schürze oder als Abschirmelement ausgebildet. Ferner umfasst das Gehäuse 10 eine Absaugung 11. Diese ist in der vorliegenden Ausführungsform lediglich als in das Gehäuse 10 mündender Stutzen dargestellt. An diesen Stutzen kann beispielsweise eine Absaugvorrichtung angeschlossen werden. Diese Absaugvorrichtung kann gemäß Stand der Technik ausgebildet sein.

Figur 4 zeigt eine schematische Schnittdarstellung von Teilen der Anordnung der Figur 3. Die Backformen 2 umfassen wiederum Backformkavitäten 1, die durch die vorliegende Anordnung gereinigt werden können. Ferner sind zwei Düsen 5 vorgesehen, deren Düsenausgänge 6 auf die Backformen 2 bzw. auf die Backformkavitäten 1 gerichtet sind. Insbesondere sind die beiden Düsen 5 in unterschiedlichen Winkeln auf die Backformkavitäten 1 gerichtet. Das Gehäuse 10 ist als Abschirmung ausgebildet und Richtung Backformen 2 geöffnet.

Gemäß der vorliegenden Ausführungsform der Figur 4 können gleichzeitig mehrere Backformen 2 bzw. mehrere Backformkavitäten 1 gereinigt werden. In allen Ausführungsformen können jedoch mehrere Düsen 5 auch lediglich auf eine einzige Backformkavität 1 gerichtet sein. Erst durch Verfahren der Düsen 5 kann der Reinigungsbereich 7 zu einer anderen Backformkavität 1 verlagert werden.

Die Ausführungsformen der Figuren 1, 2, 3, 4 können beispielsweise an einem eigenständigen Maschinengestell 19 oder an einer eigenständigen Reinigungsstation angeordnet sein. Gegebenenfalls können die Komponenten zur Reinigung der Backformkavitäten 1 jedoch auch direkt an einer bestehenden Backvorrichtung angeordnet werden.

Beispielsweise kann die Reinigungsvorrichtung als andockbares Modul ausgebildet sein, das im Vorkopf oder im Service-Bereich an der Backmaschine angeordnet werden kann. Gegebenenfalls kann jedoch die Reinigungsvorrichtung auch dauerhaft an oder in einer Backmaschine vorgesehen sein. Die Reinigungsvorrichtung umfasst insbesondere zumindest eine mit einer Trockeneisstrahlvorrichtung 3 verbundene Düse 5 und bevorzugt ein Gehäuse 10.

Figur 5 zeigt eine schematische Ansicht einer Backvorrichtung 20. Diese umfasst einen Endlosförderer 21, eine Beschickungsvorrichtung 22, einen Backraum 23, eine Produktentnahmevorrichtung 24, eine Vorrichtung zum Öffnen der Backzangen 25 und eine Vorrichtung 26 zum Schließen der Backzangen. Bevorzugt ist die Backvorrichtung eine Backvorrichtung gemäß dem Dokument WO2014111511A1.

Ferner ist eine Backformentnahmevorrichtung 27 vorgesehen. Diese Backformentnahmevorrichtung 27 ist dazu geeignet und/oder eingerichtet, Backformen 2 vom Endlosförderer 21 zu entnehmen und der Reinigungsanordnung zuzuführen. Gegebenenfalls ist jedoch die Backvorrichtung 20 ein Teil der Anordnung. Die Backformentnahmevorrichtung 27 kann beispielsweise als Roboterarm, Greifarm, Greifbalken oder ähnliches ausgebildet sein. Gegebenenfalls werden einzelne Backformen 2 aus der Backvorrichtung 20 bzw. aus dem Backprozess entnommen und gereinigt. Gegebenenfalls wird unmittelbar nach dem Entnehmen einer Backform 2 eine weitere, gereinigte Backform 2 zugeführt, sodass ein ungestörter durchlaufender Backbetrieb aufrechterhalten werden kann.

Es empfiehlt sich gegebenenfalls, die neu zugeführten Backformen 2 durch eine Heizvorrichtung 16 vorzuheizen. Diese Heizvorrichtung 16 kann eine eigenständige Heizvorrichtung sein. Gegebenenfalls ist die Heizvorrichtung 16 jedoch die Heizvorrichtung 16 der Backvorrichtung 20.

Ein erfindungsgemäßes Verfahren kann insbesondere folgende Schritte umfassen:

Die Backformen werden in einer Backvorrichtung zur Herstellung von Backprodukten mit einem Teig gefüllt. Nach der Entnahme des Backproduktes und insbesondere wenn die Backform verschmutzt ist, kann die Backform automatisch oder automatisiert aus dem Backprozess entnommen werden. Dazu ist die Backform lösbar mit einem Endlosförderer der Backvorrichtung verbunden. Über die Backformentnahmevorrichtung kann die Backform zur Reinigung an einer Haltevorrichtung oder an eine Bewegungsvorrichtung übergeben werden. In weiterer Folge wird die Backform gegebenenfalls aufgeklappt, sodass die Backformkavitäten nach außen geöffnet sind. In einem weiteren Schritt kann die Bewegungsvorrichtung derart betätigt werden, dass die Backformkavitäten bzw. Backform in den Reinigungsbereich der Anordnung befördert wird. In einem nächsten Schritt kann dann die Trockeneisstrahlvorrichtung betätigt werden, sodass ein Gemisch aus einem Trägerfluid und Trockeneis durch die Düse und insbesondere durch den Düsenausgang auf die Backformkavität(en) ausgegeben wird. Bevorzugt sind mehrere Düsen vorgesehen, wobei ein Gemisch gleichzeitig durch beide Düsen in den Reinigungsbereich oder in mehrere Reinigungsbereiche ausgegeben wird.

Gegebenenfalls werden die Düsen dabei kontinuierlich oder intermittierend von einer Düsenbewegungsvorrichtung bewegt, sodass der Reinigungsbereich über die gesamte Backform oder über den gesamten zu reinigenden Bereich der Backform bewegt werden kann. Ist die Backform ausreichend gereinigt, so kann sie gegebenenfalls wieder zugeklappt werden. In einem nächsten Schritt kann beispielsweise eine Vorwärmung in einer Heizvorrichtung vorgenommen werden, sodass die Backform bereits Betriebstemperatur aufweist, wenn sie über die Backformentnahmevorrichtung zurück in die Backvorrichtung transportiert wird. In der Backvorrichtung kann die Backform wieder an einer dafür vorgesehenen Stelle mit dem Endlosförderer verbunden werden.

Gegebenenfalls wird der Verschmutzungsgrad der Backform vor oder während der Reinigung durch eine Bilderfassungseinrichtung detektiert. Gegebenenfalls wird nach der Reinigung der Verschmutzungsgrad der Backform durch eine Bilderfassungseinrichtung kontrolliert.

## Patentansprüche

1. Anordnung zum Reinigen von halbschalenförmigen Backformkavitäten (1) einer zur Herstellung von Hohlwaffeln oder Kuchen eingerichteten Backform (2), wobei die Anordnung eine Trockeneisstrahlvorrichtung (3) zur Bereitstellung eines heterogenen Gemisches (4) aus Trockeneis, wie insbesondere gefrorenem, festem CO₂-Granulat und aus einem Trägerfluid, wie insbesondere Druckluft umfasst,
wobei die Trockeneisstrahlanordnung (3) mit einer Düse (5) zur Ausgabe des Gemisches (4) verbunden ist,
wobei ein Düsenausgang (6) der Düse (5) auf einen Reinigungsbereich (7) gerichtet ist,
und wobei eine Haltevorrichtung (8) zur Halterung einer Backform (2) vorgesehen ist,
**dadurch gekennzeichnet, dass** eine Bewegungsvorrichtung (9) zur Relativbewegung der Düse (5) gegenüber der Haltevorrichtung (8) oder der von der Haltevorrichtung (8) gehaltenen Backform (2) vorgesehen ist.

2. Anordnung nach Anspruch 1, **dadurch gekennzeichnet, dass** ein Gehäuse (10) vorgesehen ist, das den Reinigungsbereich (7) und den Düsenausgang (6) umgibt und das den Reinigungsbereich (7) zu einem überwiegenden Teil oder vollständig abschirmt.

3. Anordnung nach Anspruch 1 oder 2, **dadurch gekennzeichnet, dass** eine Absaugung (11) zur Absaugung des von der Backform (2) umgelenkten Gemisches (4) und der gegebenenfalls darin enthaltenen Schmutzpartikel vorgesehen ist.

4. Anordnung nach einem der Ansprüche 1 bis 3, **dadurch gekennzeichnet, dass** die Bewegungsvorrichtung (9) eine Backformbewegungsvorrichtung (12) zur Bewegung einer oder mehrerer Backformen (2) umfasst,
wobei die Backformbewegungsvorrichtung (12) insbesondere als Endlosförderer, Kettenförderer, Bandförderer, Riemenförderer, Greifbalken, Greifarm oder Linearantrieb ausgebildet ist.

5. Anordnung nach einem der Ansprüche 1 bis 4, **dadurch gekennzeichnet, dass** die Bewegungsvorrichtung (9) eine Düsenbewegungsvorrichtung (13) zur Bewegung der Düse (5) gegenüber der Backform (2) umfasst,
wobei die Düsenbewegungsvorrichtung (13) insbesondere als Linearantrieb ausgebildet ist.

6. Anordnung nach einem der Ansprüche 1 bis 5, **dadurch gekennzeichnet, dass** die Bewegungsvorrichtung (9) eine Backformbewegungsvorrichtung (12) zur Bewegung einer oder mehrerer Backformen (2) umfasst,
dass die Bewegungsvorrichtung (9) eine Düsenbewegungsvorrichtung (13) zur Bewegung der Düse (5) gegenüber der Backform (2) umfasst,
und dass die Backformbewegungsvorrichtung (12) und die Düsenbewegungsvorrichtung (13) zwei unabhängig voneinander betätigbare Bewegungsvorrichtungen sind, deren Bewegungsrichtungen (14, 15) voneinander abweichen und insbesondere quer zueinander verlaufen.

7. Anordnung nach einem der Ansprüche 1 bis 6, **dadurch gekennzeichnet, dass** zwei oder mehr Düsen (5) vorgesehen sind, die zur Abgabe des Gemisches (4) auf einen Reinigungsbereich (7) gerichtet sind,
wobei die Düsen (5) insbesondere starr miteinander verbunden sind,
und wobei die Düsen (5) insbesondere zusammen durch Betätigung der Düsenbewegungsvorrichtung (13) verfahrbar sind.

8. Anordnung nach einem der Ansprüche 1 bis 7, **dadurch gekennzeichnet, dass** zwei oder mehr Düsen (5) vorgesehen sind, die zur Abgabe des Gemisches (4) auf einen Reinigungsbereich (7) gerichtet sind,
und dass zwei Düsen (5) in unterschiedlichen Winkeln auf einen Reinigungsbereich (7) und insbesondere auf eine im Reinigungsbereich positionierte Backformkavität (1) gerichtet sind.

9. Anordnung nach einem der Ansprüche 1 bis 8, **dadurch gekennzeichnet, dass** eine Heizvorrichtung (16) zur Vorwärmung der Backform (2) nach der Reinigung vorgesehen ist.

10. Anordnung nach einem der Ansprüche 1 bis 9, **dadurch gekennzeichnet, dass** eine Klappvorrichtung (17) zum Öffnen und/oder Schließen einer als Backzange ausgebildeten Backform (2) oder zum Wenden einer Backform (2) vorgesehen ist.

11. Anordnung nach einem der Ansprüche 1 bis 10, **dadurch gekennzeichnet, dass** eine Bilderfassungseinrichtung (18) zur optischen Erfassung des Verschmutzungsgrades einer Backform (2) vorgesehen ist.

12. Anordnung nach einem der Ansprüche 1 bis 11, **dadurch gekennzeichnet, dass** die Anordnung ein Maschinengestell (19) mit einer Backformbewegungsvorrichtung (12) zur Bewegung einer oder mehrerer Backformen (2) umfasst, und dass entlang des Verlaufs der Backformbewegungsvorrichtung (12) eine oder die Heizvorrichtung (16), eine oder die Klappvorrichtung (17), eine oder die Bilderfassungseinrichtung (18) und eine oder die Düsen (5) angeordnet und insbesondere nacheinander angeordnet sind.

13. Anordnung nach einem der Ansprüche 1 bis 12, **dadurch gekennzeichnet, dass** eine Backvorrichtung (20) vorgesehen ist, die einen Endlosförderer (21) umfasst, an dem die Backformen (2) und insbesondere die als Backzangen ausgebildeten Backformen (2) lösbar festlegbar oder festgelegt sind,
und dass eine Backformentnahmevorrichtung (27) zur Entnahme einer verschmutzten Backform (2) aus der Backvorrichtung (20), zur Übergabe an die Haltevorrichtung (8) oder an die Backformbewegungsvorrichtung (12) und zur Übergabe einer oder der gereinigten Backform (2) an die Backvorrichtung (20) vorgesehen ist.

14. Verfahren zum Reinigen einer Backform, umfassend folgende Schritte:
- Backen eines oder mehrerer Backprodukte in einer Backform,
- Reinigen der Backform durch Ausgeben eines Gemisches umfassend Trockeneis, wie insbesondere gefrorenes, festes CO₂-Granulat und ein Trägerfluid wie insbesondere Druckluft durch mindestens eine Düse, und durch Betätigen einer Bewegungsvorrichtung zur Relativbewegung der mindestens einen Düse gegenüber der Halterung oder gegenüber der von der Halterung gehaltenen Backform, wobei eine zu reinigende Backform nach dem Backen eines oder mehrerer Backprodukte in einer Backform und vor dem Reinigen der Backform von einer Backformentnahmevorrichtung aus der Backmaschine oder aus dem Backprozess entnommen wird und an die Halterung oder die Backformbewegungsvorrichtung übergeben wird, und dass die Backform nach dem Reinigen von einer Backformentnahmevorrichtung wieder an die Backmaschine übergeben wird.

15. Verfahren nach Anspruch 14, **dadurch gekennzeichnet, dass** bei der oder zur Reinigung der Backform eine Anordnung nach einem der Ansprüche 1 bis 13 verwendet wird.
